# EUROPÄISCHE PATENTSCHRIFT

(11) **EP 1 110 329 B1**
(45) Veröffentlichungstag und Bekanntmachung des Hinweises auf die Patenterteilung: **18.12.2002**
(21) Anmeldenummer: 99968744.5
(22) Anmeldetag: 01.09.1999
(51) Int. Cl.: H04B 1/16, H04B 10/10

(54) **ELEKTRONISCHE SCHALTUNGSANORDNUNG**
ELECTRONIC CIRCUIT
CIRCUIT ELECTRIQUE

(30) Priorität: 02.09.1998 DE 19839997
(43) Veröffentlichungstag der Anmeldung: 27.06.2001
(73) Patentinhaber: Bayerische Motoren Werke Aktiengesellschaft, 80809 München (DE)
(72) Erfinder: THIEL, Christian, D-83098 Brannenburg (DE); ESSL, Hans-Christian, D-93186 Pettendorf (DE); PANZER, Klaus, D-93049 Regensburg (DE)
(86) Internationale Anmeldenummer: EP9906436
(87) Internationale Veröffentlichungsnummer: WO00014889

(56) Entgegenhaltungen:
- EP-A- 0 367 333
- WO-A-99/03219
- US-A- 5 115 236
- US-A- 5 305 459

## Beschreibung

Die Erfindung bezieht sich auf eine elektronische Schaltungsanordnung mit einem Empfangsteil, welches ein von außen einfallendes physikalisches Signal erfasst und als Reaktion hierauf einen elektrischen Signalstrom liefert, und mit einem dem Empfangsteil zugeordneten, durch eine Versorgungsspannung gespeisten Steuerund Auswerteteil, welches mit dem elektrischen Signalstrom beaufschlagt ist und an dessen Signalausgang ein elektrisches Auswertesignal abgreifbar ist. Die elektronische Schaltungsanordnung ist in einem ersten, bei eingeschalteter Versorgungsspannung arbeitenden Betriebszustand und einem zweiten, bei abgeschalteter Versorgungsspannung ohne Leistungsaufnahme ruhenden Ruhezustand betreibbar.

Empfangsschaltungen für von außen einfallende physikalische Signale werden bei vielen technischen Anwendungen in einem Warte- bzw. Ruhezustand gehalten, bei dem keine Signale eintreffen, die auszuwerten sind. Im Sinnen einer möglichst wenig Strom verbrauchenden Betriebsart ist es vorteilhaft, dass die Schaltungsanordnung in einen so genannten "Sleep-Modus" verbracht wird, und nach Wiedereinsetzen der zu erfassenden Signale sich selbsttätig wieder in den normalen Betriebszustand versetzt. In diesem "Sleep-modus" soll die Schaltungsanordnung möglichst wenig elektrische Leistung aufnehmen. Beispielsweise sind Schaltungsanordnungen zum Einsatz in optischen Übertragungswegen mit Lichtwellenleitem bekannt, bei denen der optoelektronische Empfänger in einen "Sleep-modus" verbringbar ist. Die Realisierung der "Sleep-modus" Funktion erfordert gemäß einer vorbekannten Lösung zusätzlich zum Lichtwellenleiter, der die optische Information zum optischen Empfangselement transportiert, eine gesonderte elektrische Verbindung, über die der Betriebsmodus gesteuert wird. Bei einer weiteren vorbekannten "Sleep-modus"-Schaltung, die ohne eine zusätzliche elektrische Leitung auskommt, ist ein wesentlich größerer Schaltungsaufwand notwendig, der einen unerwünscht hohen Stromverbrauch im "Sleep-modus" zur Folge hat. Dies ist bei einer bevorzugten Anwendung der Schaltung in einer Datenübertragungsstrecke in einem Kraftfahrzeug von entscheidender Bedeutung, da hier jedes eingesparte Kabel und niedriger Stromverbrauch im Sleep-modus wichtig sind.

Eine gattungsgemäße, elektronische Schaltungsanordnung ist aus der US 5,115 236 bekannt, bei der ein Empfangsteil einen elektrischen Signalstrom liefert und an einen Auswerteeinheit übermittelt. Die Auswerteeinheit ist mit einer Steuereinrichtung gekoppelt, die ebenfalls von einem Ruhestromdetektor, der unter anderem einen Operationsverstärker umfasst, beaufschlagt wird. Vom Operationsverstärker wird ein verstärkter Signalstrom des Empfangsteil an die Steuereinrichtung weitergegeben, die ein entsprechendes Durchschaltsignal für das Auswerteteil erzeugt. Der vorliegende Ruhestromdetektor ist jedoch ständig mit der Versorgungsspannung beaufschlagt und verbraucht einen kontinuierlichen Ruhestrom.

Der Erfindung liegt die Aufgabe zugrunde, eine elektrische Schaltungsanordnung der gattungsgemäßen Art zur Verfügung zu stellen, die mit schaltungstechnisch einfachen Mitteln eine möglichst geringe Leistungsaufnahme der Schaltungsanordnung im Ruhezustand steuert.

Diese Aufgabe wird durch eine Schaltungsanordnung gemäß Anspruch 1 gelöst.

Demgemäss ist vorgesehen, dass parallel zu der aus Empfangsteil und Steuer- und Auswerteteil bestehenden Serienschaltung ein Ruhestromdetektor geschaltet ist, der im Ruhezustand der Schaltungsanordnung, d. h. bei abgeschalteter Versorgungsspannung, den vom Empfangsteil gelieferten Signalstrom erfasst und als Reaktion hierauf ein Einschalten der Schaltungsanordnung in den Betriebszustand steuert.

Erfindungsgemäß ist der Ruhestrom-Detektor durch ein über den Ruhestrom steuerbaren Schalter ausgebildet, der sowohl im Betriebszustand als auch im Ruhezustand der Schaltungsanordnung sperrt, solange kein Eigenstrom vorliegt, und im Ruhezustand der Schaltungsanordnung bei Vorliegen eines Signalstromes des Empfangsteils ein Steuersignal liefert, durch das die Schaltung über die nachfolgende Logik wieder in den Betriebszustand übergeht.

Die mit der Erfindung erzielten Vorteile bestehen insbesondere darin, eine Schaltungsanordnung zur Verfügung zu stellen, die insbesondere für den Einsatz sehr schneller optischer Übertragungswege mit kontinuierlichem Datenfluss in einem Kraftfahrzeug brauchbar ist. Wesentlich beim Einsatz im Kraftfahrzeug ist dabei die Möglichkeit, die Schaltungsanordnung in einem "Sleep-Modus" zu betreiben, bei welchem der Empfänger auch bei minimalstem Stromverbrauch noch aktiv ist und sich bei Wiedereinsetzen des zu erfassenden physikalischen, insbesondere optischen Signals selbsttätig wieder in den normalen Betriebszustand verbringt.

Gemäß einer besonders bevorzugten Ausführung der Erfindung ist der Ruhestrom-Detektor durch einen Schalttransistor ausgebildet, dessen Steueranschluss mit dem Ruhestrom beaufschlagt ist, und dessen einer Elektrodenanschluss mit der Masse und deren anderer Elektrodenanschluss über einen hochohmigen Wiederstand an die Versorgungsspannung gekoppelt ist.

Bei einer weiteren vorteilhaften Ausbildung der Erfindung kann vorgesehen sein, dass das Empfangsteil und das Steuer- und Auswerteteil durch eine fest verdrahtete Funktionsbaugruppe mit lediglich drei von außen zugänglichen Anschlüssen (Masse, Signalausgang und Versorgungsspannung) ausgebildet ist.

Zweckmäßige Weiterbildungen der Erfindung ergeben sich aus den Unteransprüchen.

Nachfolgend wird die Erfindung anhand zweier in der Zeichnung dargestellte Ausführungsbeispiele weiter erläutert. Im einzelnen zeigen die schematischen Darstellungen in:
- Figur 1: einen schematischen Schaltplan einer Schaltungsanordnung nach einem ersten Ausführungsbeispiel der Erfindung; und
- Figur 2: einen schematischen Schaltplan einer Schaltungsanordnung nach einem zweiten Ausführungsbeispiel der Erfindung.

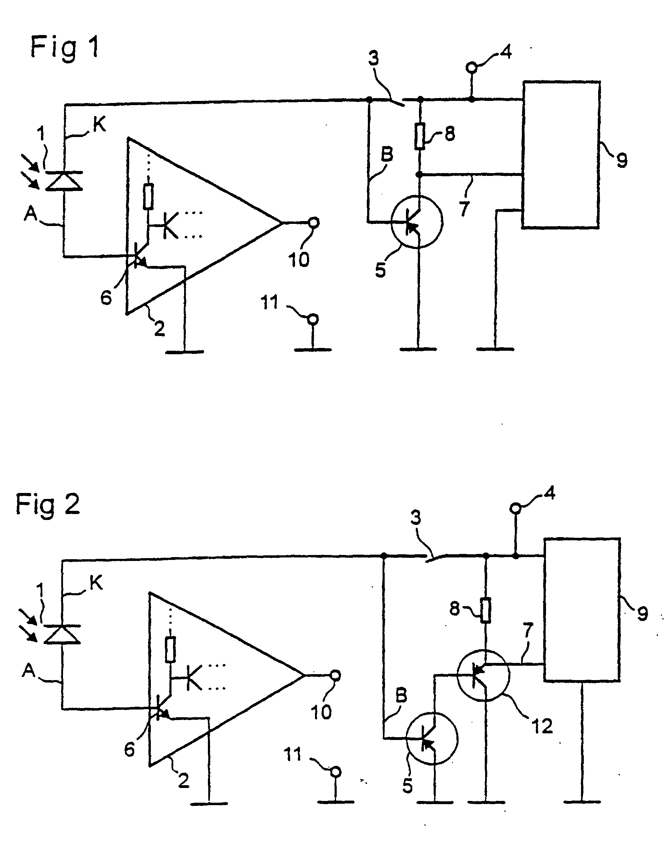

Das in Figur 1 gezeigte Ausführungsbeispiel einer erfindungsgemäßen Schaltungsanordnung besitzt ein optisches Empfangsteil 1 in Form einer Fotodiode, deren Anode A am Eingang einer Verstärkerschaltung 2 liegt und deren Kathode K zum einen über einen Schalter 3 mit der Versorgungsspannung 4 und zum anderen mit dem Steuereingang B eines durch einen Schalttransistor 5 ausgebildeten Ruhestromdetektors verbunden ist. Über den Schalter 3 wird die Schaltungsanordnung in den Ruhezustand oder den Betriebszustand versetzt. Der Ruhestromdetektor 5 wird dem Prinzip der Erfindung folgend in Sperrichtung betrieben, er sperrt sowohl im Betriebszustand, als auch im Ruhezustand der Schaltungsanordnung, solange kein Signalstrom der Fotodiode 1 vorliegt. Die Basisemitterstrecke des Schalttransistors 5 kompensiert dabei die Basisemitterstrecke eines Transistors 6 in einer ersten Stufe der Verstärkerschaltung 2, so dass bei geöffnetem Schalter 3 die Fotodiode 1 erfindungsgemäß im fotovoltaischen Betrieb, d.h. also ohne Vorspannung gehalten werden kann, ohne diese Schaltungsanordnung wäre die innere Spannung der Fotodiode im fotovoltaischen Betrieb kleiner als die Spannung der Basisemitterstrecke des Transistors 6 und der Fotostrom könnte nicht abgegriffen werden. Der Fotostrom der Fotodiode 1 kann nun zum Durchschalten des Schalttransistors 5 abgegriffen werden, der aufgrund dieses Signals durchschaltet und so auf der Leitung 7 über den hochohmigen Widerstand 8 ein Startsignal an eine nachfolgende Logikschaltung 9 liefert. Die Logikschaltung 9 kann daraufhin die Versorgungsspannung 4 (beispielsweise +5 Volt) über den Schalter 3 wieder freischalten. Daraufhin befindet sich die Schaltung wieder im normalen, empfangsbereiten Betriebszustand, und die Signale der Diode 1 werden über den Verstärker 2 auf den Ausgang 10 ausgegeben.

Figur 2 zeigt ein zweites Ausführungsbeispiel der Erfindung, bei der in Modifikation der Schaltungsanordnung nach Figur 1 nach dem pnp-Schalttransistor 5 ein pnp-Verstärkungstransistor 12 geschaltet ist, der zum einen mit Masse, und zum anderen mit dem hochohmigen Widerstand 8 (beispielsweise 100k Ohm), an dem über die Steuerleitung 7 ein Steuersignal durch die Logikschaltung 9 abgegriffen wird, verbunden ist.
Der Vorteil dieser Schaltungsergänzung liegt darin, dass die Schaltung noch empfindlicher auf Licht wird, ohne dass ein zusätzlicher Ruhestrom entsteht.

## Patentansprüche

1. Elektronische Schaltungsanordnung mit einem Empfangsteil (1), welches ein von außen einfallendes physikalisches Signal erfasst und als Reaktion hierauf einen elektrischen Signalstrom liefert, und mit einem dem Empfangsteil (1) zugeordneten, durch eine Versorgungsspannung (4) gespeisten Steuer- und Auswerteteil (2), welches mit dem elektrischen Signalstrom beaufschlagt ist und an dessen Signalausgang (10) ein elektrisches Auswertesignal abgreifbar ist, welche Schaltungsanordnung in einem ersten, bei eingeschalteter Versorgungsspannung (4) arbeitenden Betriebszustand und in einem zweiten, bei abgeschalteter Versorgungsspannung (4) ohne Leistungsaufnahme ruhenden Ruhezustand betreibbar ist, wobei parallel zu der aus Empfangsteil (1) und Steuer- und Auswerteteil (2) bestehenden Serienschaltung ein Ruhestromdetektor (5) geschaltet ist, der im Ruhezustand der Schaltungsanordnung, d. h. bei abgeschalteter Versorgungsspannung (4), den vom Empfangsteil (1) gelieferten Signalstrom erfasst und als Reaktion hierauf ein Einschalten der Schaltungsanordnung in den Betriebszustand steuert,
**dadurch gekennzeichnet,**
**dass** der Ruhestromdetektor (5) durch einen über den Signalstrom steuerbaren Schalter ausgebildet ist, der sowohl im Betriebszustand als auch im Ruhezustand der Schaltungsanordnung sperrt, solange kein Signalstrom vorliegt, und ― im Ruhezustand der Schaltungsanordnung ― bei Vorliegen eines Signalstromes ein Steuersignal liefert.

2. Schaltungsanordnung nach Anspruch 1
**dadurch gekennzeichnet,**
**dass** der Ruhestromdetektor (5) einen Schalttransistor aufweist, dessen Steueranschluss (B) mit dem Signalstrom beaufschlagt ist, und dessen einer Elektrodenanschluss mit Masse, dessen anderer Elektrodenanschluss über einen hochohmigen Widerstand (8) an die Versorgungsspannung (4) gekoppelt ist.

3. Schaltungsordnung nach Anspruch 1 oder 2
**dadurch gekennzeichnet,**
**dass** das Empfangsteil (1) und das Steuer- und Auswerteteil (2) durch eine fest verdrahtete Funktionsbaugruppe mit lediglich drei von außen zugänglichen Anschlüssen Masse (11), Signalausgang (10) und Versorgungsspannung (4) ausgebildet ist.

4. Schaltungsanordnung nach einem der Ansprüche 1 bis 3,
**dadurch gekennzeichnet,**
**dass** dem Ruhestromdetektor (5) eine Logikschaltung (9) nachgeschaltet ist, welche das vom Ruhestromdetektor gelieferte Steuersignal auswertet, wobei die Logikschaltung im Ruhezustand der Schaltungsanordnung stromlos gehalten ist und erst nach Vorliegen eines Ruhestromes selbsttätig eingeschaltet wird.

5. Schaltungsanordnung nach einem der Ansprüche 2 bis 4
**dadurch gekennzeichnet,**
**dass** der Schalttransistor (5) derart in Sperrrichtung betrieben wird, dass er in jedem Betriebszustand der Schaltungsanordnung sperrt, solange kein Signalstrom vorliegt.

6. Schaltungsanordnung nach Anspruch 5
**dadurch gekennzeichnet,**
**dass** dem Schalttransistor (5) ein Verstärkungstransistor (12) nachgeschaltet ist.

7. Schaltungsanordnung nach einem der vorhergehenden Ansprüche,
**dadurch gekennzeichnet,**
**dass** das Empfangsteil (1) durch einen Lichtdetektor, insbesondere eine Fotodiode ausgebildet ist.

8. Schaltungsanordnung nach Anspruch 7,
**dadurch gekennzeichnet,**
**dass** der Steuer- und Auswerteteil (2) eine Basis-Emitter-Strecke eines Transistors (6) umfasst und der parallel zu der Serienschaltung bestehend aus Fotodiode (1) und Basis-Emiter-Strecke geschaltete Ruhestromdetektor (5) einen zur Basis-Emitter-Strecke komplementär geschalteten Schalttransistor aufweist.

9. Schaltungsanordnung nach Anspruch 8
**dadurch gekennzeichnet,**
**dass** die Basis-Emitter-Strecke durch einen npn-Transistor (6), und der Schalttransistor des Ruhestromdetektors (5) durch einen pnp-Transistor (5) ausgebildet ist.

## Claims

1. An electronic circuit with a receiver section (1), which detects the arrival of an external physical signal and as a reaction to this delivers an electrical signal current, and with a control and evaluation section (2), fed by a supply voltage (4), associated with the receiver section (1), which is impacted by the signal current and on whose signal output (10) an electrical evaluation signal can be accessed, which electronic circuit can be operated in a first working operating condition with the supply voltage (4) switched on and in a second rest condition with the supply voltage (4) switched off without current consumption, in which in parallel with the series circuit comprising the receiver section and the control and evaluation section, a rest current detector is connected which in the rest condition of the circuit arrangement, i.e. with the supply voltage switched off, detects the signal current delivered from the receiver section and as a reaction to it controls the switching of the circuit arrangement into the operating condition,
**characterised in that**
the rest current detector (5) is constructed from a switch which is controllable via the rest current, which is blocked both in the operating condition and in the rest condition of the circuit as long as no signal current is present, and ―in the rest condition of the circuit ― delivers a control signal in the presence of a signal current.

2. A circuit arrangement according to Claim 1
**characterised in that**
the rest current detector (5) has a switching transistor, whose control connection (B) is fed with the rest current and whose other electrodes are connected one to ground and the other via a high value resistor (8) to the supply voltage (4).

3. A circuit arrangement according to Claim 1 or Claim 2,
**characterised in that**
the receiver section (1) and the control and evaluation section (2) is formed by a fixed wired functional assembly with only three externally accessible connections ground (11), signal output (10) and supply voltage (4).

4. A circuit arrangement according to one of the Claims 1 to 3,
**characterised in that**
a logic circuit (9) is connected after the rest current detector (5), which evaluates the control signal delivered by the rest current detector, in which the logic circuit is maintained without current in the rest condition of the circuit and is automatically switched on only following the presence of a rest current.

5. A circuit arrangement according to one of the Claims 2 to 4,
**characterised in that**
the switching transistor (5) is operated in the blocking direction in such a way that it blocks in every operating condition of the circuit, as long as no signal current is present.

6. A circuit arrangement according to Claim 5
**characterised in that**
an amplifying transistor (12) is connected after the switching transistor (5).

7. A circuit arrangement according to one of the foregoing claims,
**characterised in that**
the receiver section (1) is formed from a light detector, especially a photo diode.

8. A circuit arrangement according to Claim 7
**characterised in that**
the control and evaluation section (2) comprises the base-emitter path of a transistor rest current detector connected in parallel to the series circuit comprising the photo diode (1) and the base-emitter path, has a switching transistor connected complementary to the base-emitter path.

9. A circuit arrangement according to Claim 8
**characterised in that**
the base-emitter path is formed by an npn transistor (6) and the switching transistor of the rest current detector (5) by an npn transistor (5).

## Revendications

1. Circuit électronique comportant une partie de réception (1) qui saisit un signal physique arrivant de l'extérieur et fournit en réaction un signal de courant électrique, ainsi qu'une partie de commande et d'exploitation (2) associée à la partie de réception (1), alimentée par une tension d'alimentation (4), et recevant le courant électrique du signal, et dont la sortie de signal (10) fournit un signal de traitement électrique, le circuit pouvant passer dans un premier état de fonctionnement de travail lorsque la tension d'alimentation (4) est branchée et dans un second état de repos sans prise de puissance lorsque la tension d'alimentation (4) est coupée,
avec en parallèle au montage en série formé de la partie de réception (1) et de la partie de commande et d'exploitation (2), un détecteur de courant de repos (5) qui à l'état de repos du circuit, c'est-à-dire lorsque la tension d'alimentation (4) est coupée, saisit le courant du signal fourni par la partie de réception (1) et en réaction commande le branchement du circuit de commutation dans le mode de fonctionnement,
**caractérisé en ce que**
le détecteur de courant de repos (5) est formé par un commutateur commandé par le signal de courant et qui tant à l'état de repos qu'à l'état de fonctionnement bloque le circuit aussi longtemps qu'il n'y a pas de signal de courant, et qui (au repos du circuit) fournit un signal de commande en présence d'un signal de courant.

2. Circuit selon la revendication 1,
**caractérisé en ce que**
le détecteur de courant de repos (5) comporte un transistor de commutation dont la borne de commande (B) reçoit le signal de courant et dont une électrode est reliée à la masse et l'autre à la tension d'alimentation (4) par l'intermédiaire d'une résistance fortement ohmique (8).

3. Circuit selon l'une quelconque des revendications 1 ou 2,
**caractérisé en ce que**
la partie de réception (1) et la partie de commande et d'exploitation (2) sont réalisées par un ensemble fonctionnel à câblage fixe ayant uniquement trois bornes accessibles de l'extérieur, à savoir la masse (11), la sortie de signal (10) et la tension d'alimentation (4).

4. Circuit selon l'une quelconque des revendications 1 à 3,
**caractérisé en ce qu'**
un détecteur de repos (5) est branché en aval du circuit logique (9), ce circuit exploite le signal de commande fourni par le détecteur de courant de repos et le circuit logique est tenu sans courant, à l'état de repos du circuit et ce n'est qu'en présence d'un courant de repos qu'il se branche automatiquement.

5. Circuit selon l'une quelconque des revendications 2 à 4,
**caractérisé en ce que**
le transistor de commutation (5) fonctionne dans le sens du blocage de façon que dans chaque état de fonctionnement du circuit il se bloque aussi longtemps qu'il n'y a pas de courant de signal.

6. Circuit selon la revendication 5,
**caractérisé en ce que**
le transistor de commutation (5) est suivi d'un transistor amplificateur (12).

7. Circuit selon l'une quelconque des revendications précédentes,
**caractérisé en ce que**
la partie de réception (1) est réalisée par un photodétecteur, notamment une photodiode.

8. Circuit selon la revendication 7,
**caractérisé en ce que**
la partie de commande et d'exploitation (2) comprend le chemin base-émetteur d'un transistor (6), et au montage en série formé de la photodiode (1) et du chemin base-émetteur le détecteur de repos (5), parallèle comprend un transistor de commutation branché de manière complémentaire au chemin base-émetteur.

9. Circuit selon la revendication 8,
**caractérisé en ce que**
le chemin base-émetteur est formé par un transistor npn (6) et le transistor de commutation du détecteur de courant de repos (5) est formé par un transistor pnp (5).
